# EUROPEAN PATENT SPECIFICATION

(11) **EP 2 720 432 B1**
(45) Date of publication and mention of the grant of the patent: **14.12.2016**
(21) Application number: 12007079.2
(22) Date of filing: 12.10.2012
(51) Int. Cl.: H04L 29/08, H04L 29/06, H04W 80/06

(54) **Mobile Network Session Protocol for Mobile Communication**
Mobiles Netzwerksitzungsprotokoll für mobile Kommunikation
Protocole de session de réseau mobile pour communication mobile

(43) Date of publication of application: 16.04.2014
(73) Proprietor: Qnective AG, 8050 Zürich (CH)
(72) Inventor: Ioannis, Ioannidis, 8008 Zürich (CH)
(74) Representative: Reinhardt, Thomas Johannes

(56) References cited:
- EP-A2- 0 789 499
- EP-A2- 1 303 102
- SANCHEZ CABAS M: "Session Management in Mobile Data Communications", , 15 October 1999 (1999-10-15), XP055053745, Retrieved from the Internet: URL:http://web.it.kth.se/~maguire/DEGREE-P ROJECT-REPORTS/991018-Manuel-Sanchez.pdf [retrieved on 2013-02-18]
- MANNER J: "The Local Mobility Management Protocol (LMMP); draft-manner-lmmp-00.txt", 20041001, 1 October 2004 (2004-10-01), XP015039382, ISSN: 0000-0004

## Description

### 1. BACKGROUND OF THE INVENTION

### 1.1. FIELD OF THE INVENTION

The present invention is in the field of information technology and relates to a method and system for operating a communication under inclusion of the TCP protocol between at least one first communication device and a second communication device.

### 1.2. DESCRIPTION AND DISADVANTAGES OF PRIOR ART

Internet protocols such as TCP-IP have been designed in the early days of the Internet (1980s) and have been consistently used since then. The same protocols are used for early Internet connection (dial-up) to more performing broadband connections used nowadays (ADSL, Cable, Wi-Fi). These Internet connections work well for devices which are static (plugged to a cable) or restraint to a small area (Wi-Fi). Starting in roughly 2006, mobile broadband access became available and is now used increasingly at the consumer level. The technology used varies from GSM (GPRS and edge), 3G (UMTS) or 4G (HSPA) for the more advanced networks.

There is, however, a strong need to use a broadband connection also in mobile situations, where a cable based connection or a stable WiFi-based connection is not present.

Mobile broadband access allows smart phones and other digital devices to connect to the Internet from any location from which a mobile phone call can be made. The problem with mobile Internet is however, that the user is not linked to one access point but moves with his device from one access point to another. When moving, the mobile device disconnects from the current antenna to connect to another (called a handover). It often happens that the connection is dropped during the handover either because the IP address was changed or because there are not enough slots for this communication. It also happens quite often that the signal quality differs significantly from one place to the other even without antenna handover, which makes the mobile network layer undergo many undesired network interruptions and multiple reconnection attempts.

The European Patent application EP 1 303 102 A2 discloses a network usage topology having a server which provides contents and applications to requesting clients, also to many mobile client devices. In regard of multiple different protocols resident on server and clients, in regard of the lack of session handover management or cookie management, and in regard of frequent session interruptions a problem is defined to be solved to provide persistent sessions capable of supporting multiple applications with multiple protocols on multiple devices.

Therefore, EP 1 303 102 A2 proposes the provision of a session which is held alive over one or more network disconnections, i.e. over a longer period called grace period, which enables a user to avoid repeated authentication procedures. So, content and applications can be brought to the clients avoiding too much effort of the user, when a session must be continued or resumed after a network disconnection.

However, no helpful disclosure can be seen for real-time message handling in this specific situation.

### 1.1. OBJECTIVES OF THE INVENTION

The objective of the present invention is to provide a method and system for ensuring an Internet connection with a configurable degree of reliability which is better adapted for mobile use, and which is adapted for real-time message handling.

### 2. SUMMARY AND ADVANTAGES OF THE INVENTION

This objective of the invention is achieved by the features stated in enclosed independent claims. Further advantageous arrangements and embodiments of the invention are set forth in the respective subclaims. Reference should now be made to the appended claims.

According to the basic feature of the present invention a method and respective system is disclosed for operating a communication under inclusion of a network transport layer, preferably the TCP-IP protocol, between at least one first communication device and a second communication device, - for example two mobile phones - including an initial user authentication or login procedure, wherein
at least one server controls the communication by providing a connection between the first and the second device, wherein the communication is either extended across network borders - e.g. Wifi to GSM - or is confronted with repeated network disconnections due to technical network instabilities,
which method is characterised by the steps of:
a) generating a session which is based on acknowledged user authentication data and is associated with said communication as soon as a connection has been successfully established between said server and said client,
b) keeping said session valid despite said network disconnections during a predetermined grace period, wherein said grace period is predefined to be large enough to support an intra-network handover or a temporary disconnection due to network instability.

So, lengthy repeated user authentication procedures are avoided, as the same session can be used for the same two users, although the physical connection has been disrupted one or more times. So, the connection seems to be reliable for a natural person as well as to a client device, although it is actually and physically not reliable due to temporary network disconnections. The reliability can be parameterized and thus configured by the length of said grace period in "seconds". Thus, a solution for the objective of the invention is found.

By using this feature implemented in an additional session layer which is referred to herein as inventional Session Layer and is abbreviated as iSL, with a predefined grace period that defines when a reconnection can take place transparently without notifying the application layers, the present invention provides a configurable reliable connection in case of short transport layer disconnections occurring frequently in mobile networks.

Thus, a further improved solution to the problem mentioned above is found.

Advantageously, a queue is managed by both ends for re-sending pending messages which remained unsent during one of said temporary network disconnections, but during one and the same session. This saves time and is user-friendly.

Further advantageously, the client application and the user as a natural person are not made aware of "small" problems in the network. This will save CPU time, and battery life of the client, for example a mobile phone, a smart phone, etc., as well as provide a better user experience.

Introduction to the invention: The TCP protocol used for most Internet connections guarantees a reliable connection. With its handshake and subsequent acknowledgment and retransmission mechanisms, it ensures that there is no data loss between the sender and the receiver. If one of them loses the connection the communication channel is closed even if the duration of the disconnection is short. Often before a user can use an application on his mobile phone the application undergoes an "initialization" phase which consists in the application connecting to a server and data (such as contact list or other synchronization) being exchanged between the respective client application and an application server. A disconnection from the server is usually expensive for a mobile device, since these data needs to be retransmitted when reconnecting. The problem with TCP is that it was not designed for communication between consumers accessing the Internet through a mobile device. In a mobile environment short disconnects on the TCP layer are common, due to either interruptions in the underlying wireless network or handover to another type of network (such as switching from 3G to WiFi).

Keeping this situation in mind the present invention comprises the idea of wrapping the TCP protocol -or any other transport protocol- into a new session protocol which is able to handle short network disconnections and hide them from the application making use of the network connection in order to ensure a smoother and more reliable mobile Internet connection. This is preferably implemented by another session layer on top of TCP, which will be referred to as the inventional Session Layer (iSL) in the rest of this document.

According to a preferred aspect of the invention it is proposed to add a layer on top of TCP which takes care of said above mentioned short disconnections which are typical for the mobile use of the network. This session layer is used on top of the TCP-IP protocol to ensure compatibility with Internet standards. This session layer allows keeping the network connection (as seen by the application) up for a pre-defined time period referred to herein also as grace period. This grace period is predefined large enough - preferably 20 seconds when applied to mobile phone calls and voice over IP, to support intra-network handover (for example from Wi-Fi to GSM network) and disconnections due to the network instability. This layer has the advantage to avoid frequent reconnects which in turn provides better usability and also saves battery consumption.

A potential problem with keeping the connection up during a network loss is that some messages are only valid when they are delivered in real-time (for instance the message to start a call in case of VoIP). In this case, the grace period for network handover as mentioned above for 20 seconds would introduce a too long delay. Thus, the above mentioned inventional session layer also provides a flexible architecture by means of implementing specific priorities for respective specific message types:
A first message type is: "time critical": If a message is a real-time message, the inventional iSL layer will drop it during the grace period. The sender of this message is notified of the failure of delivery by the inventional iSL layer.

A second message type is: "non time-critical". These non-time-critical messages, for example status update or chat messages, have normal priority and can be delivered later. These messages are thus kept in the queue in case of short disconnections and thus do not suffer from small disconnections.

For a full understanding of the invention it should be added that, when the connection is lost during a VoIP phone call, the call remains active during the grace period because the short disconnection is not been made visible to the rest of the application. If the UDP connection is also affected by the network connection loss, audio packets are dropped until the connection comes back. If not, the UDP traffic can continue normally.

In addition to the grace period and the message priorities, the inventional method provides a robust detection of disconnections which are specific to mobile communication. With mobile devices it is possible that the device loses connectivity without the connection loss being detected. This happens frequently with mobile devices where the operating system shuts down features - such as the TCP keep-alive mechanism- when idle in order to save battery power. In addition to that, TCP settings for servers handling mobile clients often have TCP keep-alive parameters set to long timeouts, in order to be battery-friendly to mobile devices. This way, prior art TCP servers will disadvantageously detect disconnections long after the clients cannot communicate. In this case, the inventional session layer provides a reliable connection/disconnection notification on both, client and server. If a disconnection is detected by the inventional method, the pending TCP socket is closed. Herein, the inventional session layer preferably detects the disconnection by means of acknowledgement: if no acknowledgement has been received in a predetermined time span of 5 seconds this is interpreted by the inventional session layer program logic that a disconnection is present. The server then forces closing the TCP socket.

So, in short, the essential inventional contributions are as follows:
An additional session layer on top of a transport layer (eg. TCP) to provide a stable session connection in case of mobile communication,
   - the use of a grace period,
   - the message queuing and priority ranking that take place during the grace period,
   - a robust detection of client disconnection through an additional layer.

### 3. BRIEF DESCRIPTION OF THE DRAWINGS

The present invention is illustrated by way of example and is not limited by the shape of the figures of the drawings in which:
Figure 1 illustrates the most basic structural components of a prior art hardware and software environment used for a prior art method and usable also for the inventional method,
Figure 2A illustrates the logical components of a software implementation of the inventional method, wherein the inventional session layer is implemented under an application layer and above the TCP transport layer,
Figure 2B is a depiction according to figure 2B, but without inventional layer, as prior art,
Figure 3 is a schematic depiction of the main logical connection management components, abbreviated herein also as CMC, implemented at the client site according to a preferred use of the inventional method for mobile phone communication in the logic chip of a mobile phone
Figure 4 is a depiction according to figure 3 but showing the situation at a server which hosts connection management functionality to a large plurality of network connections (end users) according to figure 3,
Figure 5 illustrates the control flow of the most important steps of a preferred embodiment of the inventional method, which is implemented in the inventional component 38 of figure 3 and component 46 of figure 4 in an overview form. This figure shows the use of the inventional session layer in the context of a VoIP application with user presence (online/offline).
Figure 6 is a comprehensive supplement schematic representation according to figure 5 illustrating together with figure 7 the differences of the inventional method relative to prior art, which in turn is shown in figure 7.
Figure 7 is a depiction according to figure 6, but without implementation of the inventional features.
Figure 8 is a schematic representation of storage locations in a message header used by the present invention.
Figure 9 is a schematic illustration of the principle to use message queues in the inventional context.

### 4. DETAILED DESCRIPTION OF THE PREFERRED EMBODIMENT

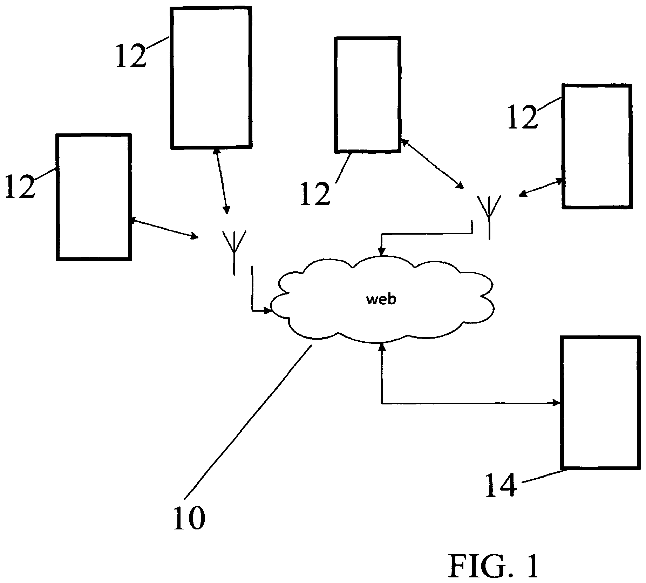

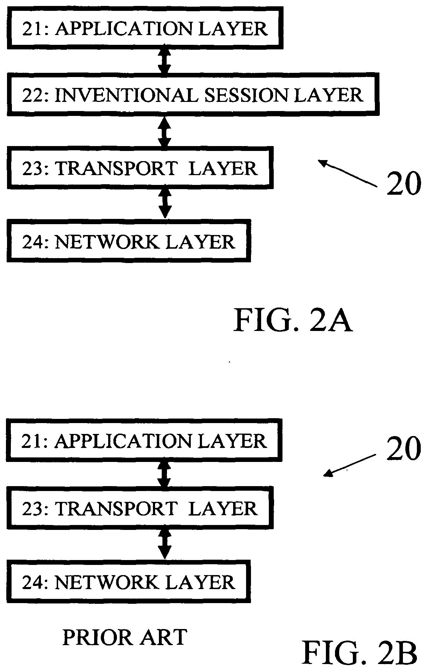

With general reference to the figures and with special reference now to figure 1 again, the inventional method is implemented in a client-server architecture for VoIP applications as represented in figure 1. Mobile devices, in particular mobile phones or smartphones 12 connect to the Internet 10 through a prior art available carrier data channel such as provided by a mobile phone Service provider like Swisscom in Switzerland, or Vodafone in Germany, and are then connected to a communication server computer 14. The mobile devices 12 act as clients in the client-server system architecture of figure 1. The server 14 is equipped with respective interface hardware and software as known from prior art, and is implemented to keep track of any respective device connection status referred to herein as "presence" and propagates the presence information to the other users of the system. The connection from said mobile clients 12 to said server 14 is done via different software layers as will be described below with reference to figure 2A and 2B in more detail.

Figure 2A illustrates the logical components of a software implementation of the inventional method, wherein the inventional method is implemented as a session layer 22, under an application layer 21 and above the TCP transport layer 23,

On top of the network layer 24 and the underlying hardware layers, which are not depicted, three different layers are implemented providing remote procedure calls according to prior art (RPC) and reliable delivery of messages.
In particular, directly above the network layer 24 a secure SSL encrypted TCP socket is implemented to provide the program functionality of reliable ordered message delivery. Since, however, on mobile networks it is often necessary that the TCP connection is closed and reconnected (for instance when switching from Wi-Fi to 3G connection), the inventional method implements an own session layer - the inventional session layer 22 on top of it, which guarantees reliable session connection in case of short transport disconnections. On top of that there is the application layer 21 protocol that provides an RPC interface to the software. The application layer 21 can be used for different kind of connections. Within the inventional context of this concrete embodiment, however, preferably user connections are used.

Figure 2B (prior art) is a depiction according to figure 2A, but without the inventional layer, given for clarification purposes. All inter-layer communication is directly done between application layer 21 and transport layer 23, which yields the disadvantages mentioned above.

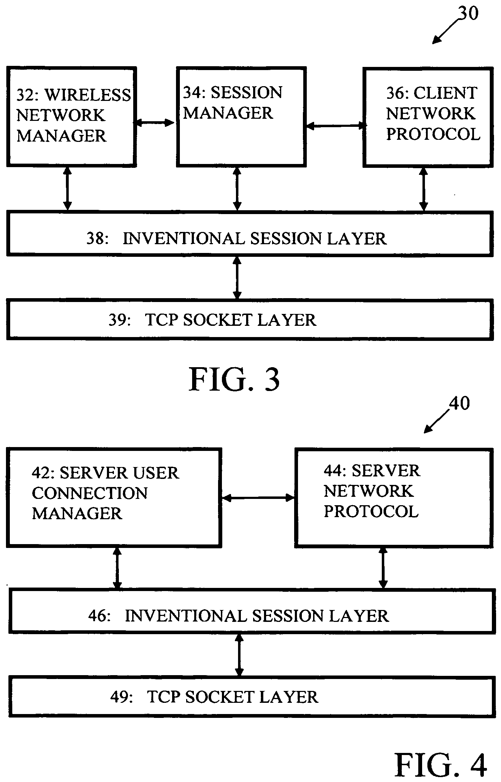

With further reference to figures 3 and 4 the connection management of the inventional method according to a preferred embodiment thereof is described in more detail, when applied to mobile phones and a respective communication server.
The inventional method when operated between clients and server creates and maintains a stable communication channel between each client and the server. The inventional method instantiates the TCP connection and uses inventional features as described further below, on top of the TCP layer to guarantee a stable session in case of network disconnections.

Figure 3 is a schematic depiction of the main logical connection management components 30, abbreviated herein also as CMC, implemented at the client site according to a preferred use of the inventional method for mobile phone communication in the logic chip of a mobile phone.

The client Connection Management Component 30 runs on a mobile phone client. The inventional method as far as the mobile part is concerned, is preferably implemented transparently to the user and is invokable via an "app" within the mobile phone, wherein in particular the actual functionality as "interlaced layer" is fully transparent for the user.
The inventional client session layer 38 can be integrated in any application that would benefit from a stable connection, preferably by integrating static or dynamic linked libraries.

The inventional CMC-component 30 can be symbolized as a software layer and manages the access to the different radio networks such as Bluetooth, Wi-Fi, mobile phone networks using GSM, UMTS, LTE, etc.. The inventional CMC-component 30 creates and maintains connections to the server using the inventional method by ensuring that the client stays connected as long as possible, and reconnects transparently when the connection is lost. This is the basic function of the inventional client part.

Next, the Connection management according to a preferred embodiment of the invention on client side is described in more detail below:
On the client side, the inventional CMC component 30 includes a prior-art TCP socket component 39 which is a TLS (transport layer security) -enabled socket. It establishes the network connection using the device application programming interface (API).

The prior art wireless network manager 32 keeps track of the different available data links (such as GPRS, EDGE, UMTS, Wi-Fi, etc), of their status, and of their available bandwidth. Based on this information and on predefined user preferences, the wireless network manager 32 chooses one of them to instantiate a data channel between the client and the server. The inventional CMC-component 30 keeps track of the state of a connection to the server and also informs other prior art components about possible connection state changes.

The network protocol 36 implements prior art logic which enables other modules to send and receive network messages.

The prior art session manager 34 manages the login status of the user.
All components 32, 34 and 36 have respectively programmed functional interfaces to each other and in particular to the inventional session layer 38 in order to implement the particular network control according to the invention.

Figure 4 is a depiction according to figure 3 but showing the situation at a server which hosts connection management functionality to a large plurality of network sessions (end users) according to figure 3.

The inventional server CMC components 40 run on a server computer and manage all network sessions connected to the system.
A server user connection manager as known from prior art interacts with the inventional session layer 46 and handles the network messages with the server network protocol component 44. The inventional session layer 46 interacts with the before-mentioned components 42 and 44 as well as with the TCP socket layer 49 via respective functional interfaces. Session layer 46 provides an inventional support for handover and short-time disconnections by implementing a transparent reconnection when the disconnection remains within the before-mentioned grace period. The inventional session layer 46 provides message priority queues and robust detection of disconnected client, wherein this functionality is implemented as a whole within the framework of the server CMC components 40.

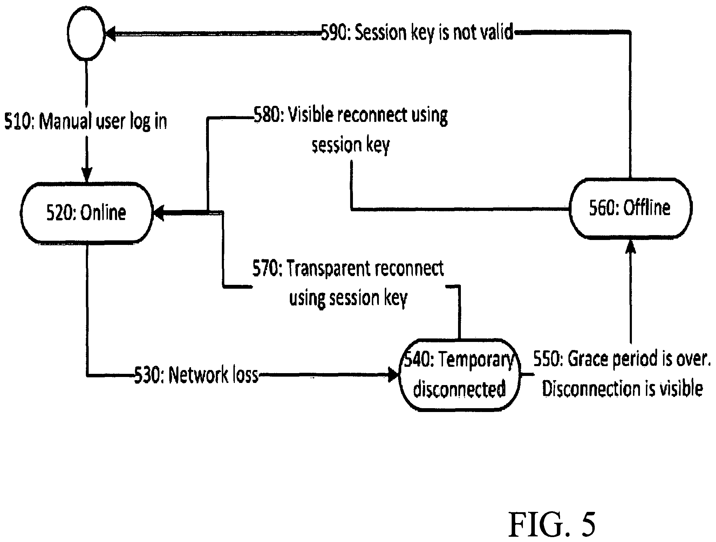

Next, with additional reference to figures 5, 6 and 7 the inventional functionality as implemented in the inventional control components 36 and 46 are described by means of some exemplary control flow in which the respective sequence of steps is predominantly determined by the inventional session layers 36 and 46.

Figure 5 illustrates the control flow of the most important steps of a preferred embodiment of the inventional method, which is implemented in the inventional session layer 38 of figure 3 and component 46 of figure 4.

When a client connects to the server, the client goes through different connection states. Figure 5 shows the possible states and transitions. It should be noted that this flow also represents the state sequence of the client seen from the server point of view.

First, the client connects. If there is no active session, it will go through a prior art standard login process 510, in which after successful network connection, the credentials are checked. When receiving valid credentials, the server generates a session token (also referred as session key) that is composed of the user id, the device id and a timestamp. The three pieces of information are concatenated and the resulting data is hashed with a secret key K. Session_token_time_t = HMAC(user id + device id + timestamp, K)

After successful authentication with a session token or credentials the client enters the "Online" state (also called logged in) 520. At this stage, the client is seen by the server as 'online' and all the connected users are informed by the server of its change of status.

In more detail, as soon as the user initiates a login, a TCP socket is opened to the specified server. Once connected, the client will wait for the socket to be encrypted. Then the login commands are exchanged. Upon successful login the session token sent by the server is stored.

With a closer focus now to the present invention, if the client loses connectivity in the online state, see Step 530, according to a basic feature of the invention the client is not immediately considered to be offline. Instead, the client communication channel is controlled to pass to a state 'temporarily disconnected', denoted with reference sign 540 for a short period of time which is predefined for example to be about 20 seconds long. That period is referred to herein as "grace period".

In this state 540, the inventionally improved communication endpoint is still connected and the respective message queue is alive both on the client and on the server. The inventional components at the client and at the server then cooperate in order to establish again the underlying TCP connection by using the session token that was generated before., i.e., the TCP is reconnected, see Step 570.
In more detail, when the client reconnects using this session token, the server verifies the identity of the client by re-computing the hash and checking that it corresponds to the token sent by the client. The security of authentication based on a session token is based on a hash function that is a one-way function. The property of a one-way function is that it can be easily computed in one direction but it is computationally infeasible to revert it. The advantage of this way of generating the session token is that it is not necessary to store the token for each user since it can be generated on the fly. No data is lost in case of server restart.

If this is done successfully during the grace period of e.g. 20 seconds, a normal communication can be continued, like it was before the temporary disruption 570.

If, however, no reconnection happens during the grace period, the client connection passes in a step 550 to the state 'offline', denoted by reference sign 560. When this state is reached on the client, the server clears the endpoint queue and drops all messages. The server also informs all connected users of the change of status. The server keeps the session key valid for 20 minutes so that the user does not have to re-enter the credentials when the network is back. After 20 minutes, the session key becomes invalid, step 590.
The inventional feature implemented in this particular context is that the "Offline" state 560 is only reached after the "grace period" -i.e. for significant disconnections- and thus the client will not oscillate too much between 'online' and 'offline' as it happens disadvantageously in prior art.

According to an optional feature of a further embodiment of the inventional method the inventional control can be configured to move directly to the offline state 560 without going through the grace period.

In the offline state 560, according to a separate feature independent of the before-mentioned feature, the inventional server logic keeps a session opened for this client for a longer amount of time such as exemplarily 20 minutes long. So, a next re-login can happen using the same session ID as before, once the connection is up again.

With reference to the re-connect step 590, after a successful re-login using the session token, the old endpoint on the client side will be destroyed and the inventional message queue, if available, is transferred to a new endpoint.

More particularly, when the client detects above-mentioned disconnection or cannot quickly re-establish a connection, it actively tries to re-establish a connection to the server. The client will always try after successfully reconnecting to re-establish the old session and, if this succeeds, to send the non-time critical messages that were queued.

Next, some features of the inventional session layer are described in more detail:
As to the inventional feature of detection of connection loss: A loss of connection can be detected according to the inventional method advantageously by evaluating one more event than in prior art, i.e., when a message could not be delivered in time - which is detected by the inventional session layer.

Prior art events are just the following ones:
- The TCP keep-alive timed-out - visible in the actual TCP control, and
- The network connection was lost - visible at the Network/Link layer.

The inventional detection of connection loss thus provides an additional benefit of the inventional session layer since it ensures that a disconnected user will be detected as "disconnected" even in case of problems with "TCP keep-alive" which happens frequently with mobile platforms due to the fact that the phone goes "idle" and does not react to disconnection.

As to the inventional feature of user login/re-login using a session key, see step 580 above:
After a successful login in which the credentials have been successfully checked, the server creates a session token for this user. This is known from prior art.

According to the invention, a user will be known to the system (server) for a predetermined amount of time, which is large enough to allow good usability. It should be noted that this time, there is no need to enter credentials and the client can reconnect without user action by using this dynamically and initially generated session token that is sent to the client after said successful first login and which is stored at the client since then already. This inventionally extended validity of the same session token allows the clients to re-login with this same token when the connection was lost (i.e., the underlying socket changed) without having to request the user to re-enter the login credentials. This saves time and adds much more comfort to the user. So, this feature is basically an automated reconnect procedure which can be performed without any interaction of the user.

According to a preferred feature of the present invention, the user session keys are completely handled by the server and the session tokens are just sent as a string to the client, similarly as known from a cookie in HTTP. Such a session token string contains all the information that the server needs to identify the user (msisdn and device id) as well as an expiration date/time of the session. The integrity of this information is protected through a hashed message authentication code (HMAC) that is also part of the session token. This allows the server to easily check if a session token is valid and if the session has expired or not without having to store the token in the server itself.

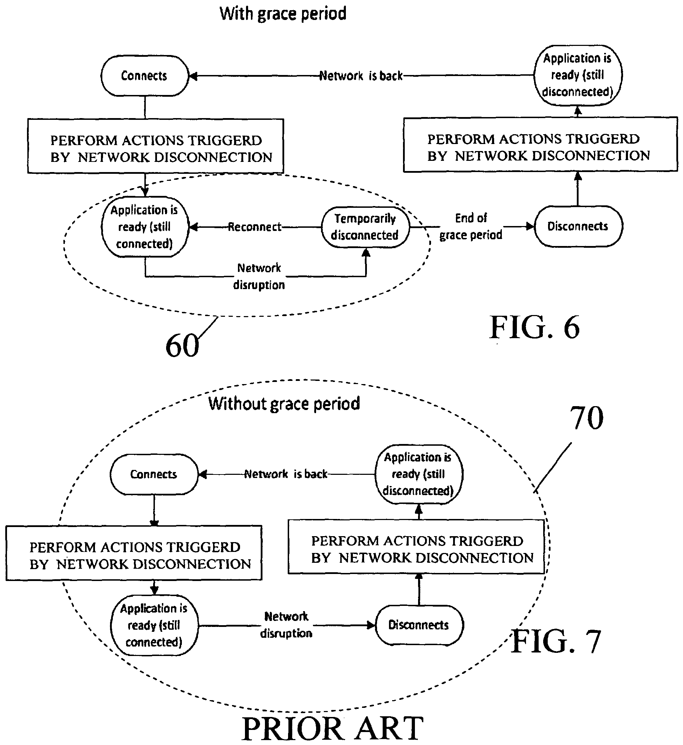

Figure 6 is a comprehensive supplement schematic representation according to figure 5 illustrating together with figure 7 the differences of the inventional method relative to prior art, which in turn is shown in figure 7, and with the focus of time information. As to the text within the figures 6 and 7 reference is made to the description of figure 5, in order to avoid repetitions.

With respect to time saving by using the present invention, the following real-life exemplary time information is given as follows:
According to the inventional method the network disconnection is basically hidden from the application and thus the following yields:
   1) When the application re-connects from a short disconnection (state 'Temporarily disconnected') the following steps are needed:
      1.i) create the network connection and the TLS socket (1-3 seconds depending on the phone)
   2) the client/application status does not change since it was already "connected".
   3) In case of short disconnection:
      3.i) the TCP socket is closed (< 1 second)

In short, only the action required at the TCP level is done, the rest is handled by the inventional session layer.

Figure 7 is a depiction according to figure 6, but without implementation of the inventional features. The real-life exemplary time information is given as follows:
1) When the application connects for the first time, the application performs a certain number of steps:
   1.i) create the network connection and the TLS socket (1-3 seconds depending on the phone)
   1.ii) login to the server, server checks the credentials (<1 second depending on the phone)
   1.iii) send presence information to 'online', which is then transferred to all contacts by the server (<1 second but requires a lot CPU and logic on the server and also this step involves other users)
2) After these steps, the client is considered to be ready or 'connected', or 'online'.
3) In case of short disconnection, without iSL, the following happens:
   3.i) TCP socket is closed (< 1 second)
   3.ii) The server informs all other users about the new 'offline' status (<1 second but requires CPU and logic on the server)
   3.iii) The application informs the user that the application is 'offline' (<1 second but involves the user)
   3.iv) The call is closed and all other communication channels (chat) are disabled. (1-2 second)
4) When this is done, the application is offline and is ready to reconnect as soon as the network is back.

A person skilled in the art will appreciate that the frequently occurring network disruptions just result in a temporary disconnection of the mobile client to the server. So in order to reconnect, the disconnected client loops within the smaller circle 60, see figure 6 printed in broken lines, and not in the time-consuming circle 70 of prior art, see figure 7 printed in broken lines. As reveals from the description of figures 5, 6 and 7, the inventional session layers 38 and 46, respectively, provide resilience properties to varying network conditions and make it possible to provide a high quality of service to the user, as short interrupts in connectivity or drops in quality can be compensated for.

Next, the separate inventional feature of network message queues is described in more detail. Queues are implemented on both client and server.

A circumstance involved with the before-mentioned feature of implementing said grace period within the inventional session layer is that some messages are valid only when they are delivered in real-time. To handle this circumstance in an adequate manner, the inventional session layer provides a support of different kinds of messages with respective different priorities.

The messages that must be delivered in real-time (called time-critical) are dropped according to the invention during said grace period. For example, in the case of a Voice-over-IP-(VoIP) application, which takes profit of the invention by implementing the inventional session layer at a mobile smartphone, and a VoIP-server, a time-critical message would be a request to make a call. The non-time-critical messages are held in an internal queue to be transmitted in case of successful reconnection. Examples of non-time-critical messages are chat messages or presence updates.

According to a preferred further feature of the invention, which is in particular of practical value, the inventional control method distinguishes between three message priorities: time-critical, non-time-critical and direct messages. Time-critical messages will not be delivered if it takes longer than a given timeout value. A reasonable time-out value for VoIP application, that will not initiate an action with too much delay, but also not falsely detect disconnections on slow networks, would be around 5 seconds.
Non-time-critical messages will be queued up indefinitely and delivered after reconnection.

Direct messages will not be queued at all and are mainly used during the login procedure to bypass the queue as long as the user is not logged in. The queues are assigned to the endpoints based on the user and the device, hence there cannot be a queue without the user being authenticated.

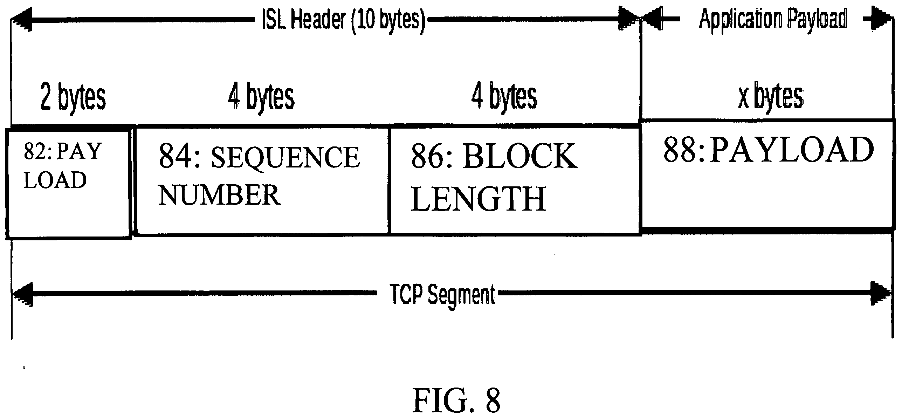

The distinction between direct messages and other messages is included in the message header (see also Fig. 8) because it has to be treated differently when received by the iSL layer. A direct message is not acknowledged. Other messages are acknowledged.

The priority of a non-direct message (time-critical or non-time-critical) is only defined by where the message is queued. It is not carried in the message header.

Figure 8 is a schematic representation of storage locations in a message header used by the present invention.
The inventional header field is for example 10 bytes long.

Storage field 82 denotes the message type. It is 2 Bytes long.

Storage field 84 contains the sequence number, 4 Bytes, like in prior art.
Storage field 86 contains the block length, 4 Bytes, like in prior art.

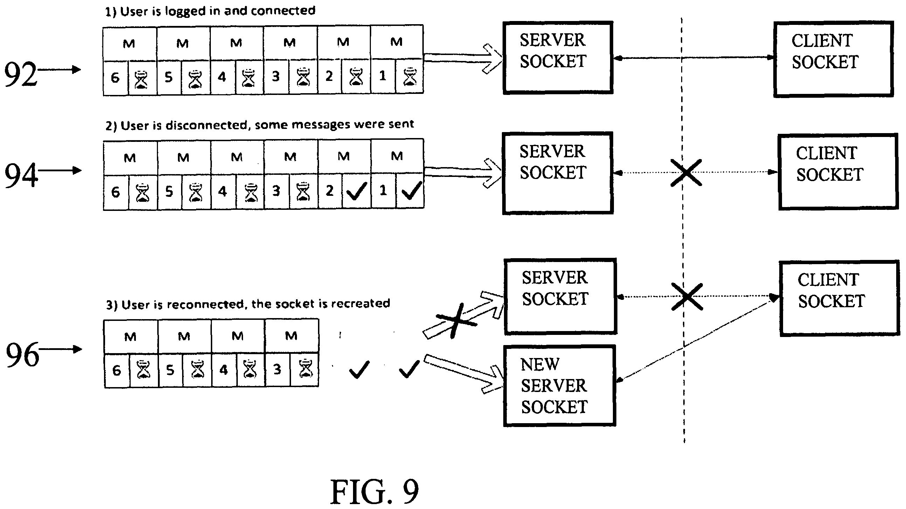

Storage field 88 contains the payload, like in prior art.
1) The message type stored in field 82 tells the inventional session layer (iSL) what message is being received. It could be either of the following:
   - An acknowledgement. In this case the message priority queue is updated as explained in Fig 9.
   - A message. In this case, the iSL sends back an acknowledgement and the message is passed to the application layer to be treated.
   - A direct message. No acknowledgement is sent and the message is passed to the application layer to be treated.
   - A synchronisation message. This is sent when a new socket is created and sequence number must be synchronised.
2) The sequence number stored in field 84 is an incremental unique number for each message.
3) The block length stored in field 86 is the message length.
4) The payload stored in field 88 comprises the message itself.

It should be noted that the iSL only takes care of acknowledgement and priority queues. The parsing of the message is done in the application layer.

Figure 9 is a schematic illustration of the inventional method how the priority queues are working. Priority queues are used on the sending side of the iSL layer, i.e. on the client when sending a message to the server, and on the server when sending a message to one client.

With reference to figure 9, this figure handles the issue of knowing which message has already been sent and received and which message will need to be resent after a successful reconnection.

Arrow 92 denotes a list of messages shown in the top row, arranged by a sequence number shown in the bottom row. The messages need to be sent. At this stage, the user (or client application) is assumed to lose the connection. The situation having lost the connection is depicted by arrow 94.

Between both situations 92 and 94, if there was not an inventional acknowledgement by the inventional layer one would not know which message was sent and which message was not sent. In a VoIP application, the consequence felt by the user would be that messages would be either lost or sent more than once. In more detail, the inventional session layer keeps all non-time-critical messages in a queue. In case of short disconnection and reconnection, the messages which are not acknowledged are resent. Without the inventional session layer, the messages would probably be dropped and would be lost. Without the inventional acknowledgement mechanism, the messages would be resent (duplicated).

The inventional method implemented in the inventional session layer provides such a mechanism:
The messages are queued and assigned a sequence number. They are first processed as "waiting for acknowledgement" which is represented by the small hour glass below the message. Assuming the sender (user A) sends a message M, to user B. The inventional session layer of user B will receive it and acknowledge it. When User A receives the acknowledgement for this message all messages with smaller sequence numbers will be acknowledged. The acknowledged messages are removed from the queue periodically upon receiving the acknowledgement from the other side.

In case of disconnection, the non-acknowledged message will be resent and the acknowledged message will be removed. This situation is illustrated by arrow 96.

In other words, and in more detail, according to a preferred implementation, every message sent to the socket is augmented with a sequence number and an acknowledgement field. When a message is successfully sent, it is acknowledged and can thus be removed from this "message queue".

The messages with direct priority are not queued.

Next, message sending, receiving and re-sending are described according to that inventional feature:
Sending a message, implemented on the server and in the client:
   When the inventional session layer sends a message, it will add it in one of the queues, except for the direct messages. Then, the message is written to the underlying socket.

Receiving a message:
When the inventional control layer reads a block of data from the socket, it checks the header to see whether it is an acknowledgement or a message.

If it is an acknowledgement the inventional session layer will mark all messages with a smaller sequence number as acknowledged and remove the acknowledged message from the message queue. If it is a message the inventional session layer will remember to send out an acknowledgement on the next heartbeat. The heartbeat mechanism is implemented for time optimisation to avoid sending an acknowledgement for every received message. "Heartbeat":
A heartbeat is implemented in the inventional layer. The heartbeat according to the invention has two special purposes:
   1. Sending out acknowledgements of the latest received sequence number (if one is pending) and
   2. Checking for timeouts.

So, such heartbeat implementation makes sure that the latest incoming message is acknowledged as soon as possible to the sender, and that time-critical messages are treated in a privileged way by the session layer.

Resending messages:
When an inventional client manages to reconnect, a command is sent to the queues to re-send all non-acknowledged messages that have not timed-out.

So, the message queue can be processed faster than in prior art, where a re-login would be necessary.

As to the network message priorities as implemented on the client side, there is only one endpoint instance that is alive as long as the software is running. This endpoint is used during the login phase to send login messages and for normal protocol communication afterwards. According to the invention, its underlying message queue is only cleared on an explicit logout, i.e., on the destruction of the session.

Further, some exemplary definitions and time parameters usable by the inventional method, here for a VoIP application are given next below:
- The Heartbeat Interval (5sec): A Heartbeat for timeout and acknowledgement
- The "Disconnect Grace Period" (20sec): A period until a disconnected endpoint's device is set to OFFLINE, called grace period.
- The Session Timeout (20min): A period for which the session is alive.
- The Login Timeout (10min): A period after which an endpoint used for login will be disconnected, if no successful login happened in that time.
- A prior art TCP socket is hold in the "connected" state during about exemplary 10 seconds according to this inventional embodiment.

The inventional method can be modified by various aspects: The grace period can be implemented on server side and client side or on the server side only. In the practical implementation of the invention, the grace period is computed only on the server. When the grace period of a client is over -say a client called client A), the server sends a message to all other clients that client A is offline. These other clients see client A as offline. On the side of client A, the mobile client continuously tries to reconnect independently from the grace period.

It is also proposed to have the grace period implemented on client A and trigger some actions when the grace period is over. Such an action may be to inform the user or stop reconnecting.

The grace period length and other time parameters can be modified to be adapted to the application. In the before-mentioned embodiment of the inventional method and use case for mobile communication the 20 seconds were chosen because it corresponds to the time needed for network handover.

It is possible to use the same mechanism on any transport layer. It will be working with UDP with only slight modification. According to a further aspect of the invention it is proposed to enqueue the UDP packets during the grace period and send them again when connection is back, although this would make sense only for "non-real-time" packets. The slight modification would be to adapt to the fact that UDP is not a reliable transport and some packets could be lost. For example, one could not rely on an acknowledgement to drop the connection.

Further, the mechanism of priority queue can be extended to more than one priority.

Keeping the foregoing disclosure in mind, a person skilled in the art will appreciate that -seen from a practical user view - different message types exist which can be associated with the before-mentioned priority properties.

One may summarize the inventional method to provide:
a) a configurable degree of reliability for messages adapted to mobile usage added on top of TCP connections across various underlying hardware layers, as basic ordering and (limited) reliability is provided by TCP,
b) an optimization using the above mentioned session tokens to reduce the overhead of a full login,
c) real time messages to serve the specific needs of real time applications, such as VoIP.

Above aspect under item b) might be definitely implemented independently, while the aspect under item c) is an extension to the aspect of item a).

The present invention can be realized in hardware, software, or a combination of hardware and software. A tool according to the present invention can be realized in a centralized fashion in one computer server system, or in a distributed fashion where different elements are spread across several interconnected computer systems, in particular smart phones. Any kind of computer system or other apparatus adapted for carrying out the methods described herein is suited. A typical combination of hardware and software could be a general purpose computer system with a computer program that, when being loaded and executed, controls the computer system such that it carries out the methods described herein.

Permanent storage hardware resources mentioned herein, such as hard disk drives, or optical, or magneto-optical devices such as Compact Discs, or Digital Versatile Disks (DVD), Flash ROM devices, are in general inter-changeable in use, unless specified explicitly differently. So, for most storage purposes a permanent, non-volatile storage device such as mentioned before can be used, when the computer system in question has no special dedication or relation to be used as a hand-held or pocket-compliant system. Then of course in absence of a hard disk drive a FLASH-ROM storage device is preferred.

Volatile Memory is generally used for temporarily storing programs or data, and in particular for loading programs or program submodules, and for the immediate data exchange with the Central Processing Unit (CPU) of a computer.

The present invention can also be embedded in a computer program product, which comprises all the features enabling the implementation of the methods described herein, and which - when loaded in a computer system - is able to carry out these methods.

Computer program means or computer program in the present context mean any expression, in any language, code or notation, of a set of instructions intended to cause a system having an information processing capability to perform a particular function either directly or after either or both of the following
a) conversion to another language, code or notation;
b) reproduction in a different material form.

### LIST OF REFERENCE SIGNS:

10 Internet
12 mobile phone, hardware and software
14 mobile communication server hardware + software
20 layer stack
21 application layer
22 inventional control layer
23 transport layer
24 network layer
30 client connection management components
32 wireless network manager
34 session manager
36 client network protocol control
38 client inventional control layer
39 client TCP socket
40 server connection management components
42 server user connection manager
44 server network protocol control
46 server inventional control layer
49 server TCP socket

Steps of the inventional method embodiment at the client:
510 connecting
520 login, session initiation
530 logged-in state
540 network is disrupted, loosing connectivity
550 Disconnection- connection is temporarily interrupted
560 reconnecting (same session token)
570 server logs-out the client
580 logged-out state
585 terminate the session
590 relogin and reconnect with same credentials and same session key
60: faster loop of steps according to invention
70: slower loop of steps according to prior art
92, 94, 96: arrows depicting different queue status information in respective different connected or not- or re-connected situations

## Claims

1. A method implemented in a server computer (14) for operating a communication under inclusion of a network (10) transport layer, preferably the TCP-IP protocol, between at least one first communication device (12) and a second communication device (12), including an initial user authentication procedure (510), wherein at least said server computer (14) controlling said communication by providing a connection between said first and second communication device, wherein said communication is either extended across network borders or is confronted with repeated network disconnections due to technical network instabilities,
**characterised by** the steps of:
a) generating a session which is based on acknowledged user authentication data and is associated with said communication as soon as a connection has been successfully established between said server computer (14) and a client (12),
b) keeping (60) said session valid despite said network disconnections during a predetermined grace period, wherein said grace period is predefined to be large enough to support an intra-network handover or a temporary disconnection due to network instability,
c) wherein messages are defined as "time-critical" and as "non-time-critical",
d) and said server computer (14) keeping (60) said session up for said non-time-critical messages during said predetermined grace period, and wherein said non-time-critical messages are queued during said grace period,
e) wherein said time-critical messages are dropped from a message queue after a given time-out value during said grace period.

2. The method according to claim 1, wherein the steps of claim 1 are performed by an additional server software layer (22, 46) acting as a session layer on top of TCP.

3. The method according to the preceding claim, wherein "direct" messages are additionally defined for messages sent during the user authentication or login procedure, wherein said "direct" messages are not queued in order to bypass an existing message queue.

4. The method according to claim 1, wherein said server (14) checking for a TCP socket disconnection to one of said mobile devices, and
if a disconnection is detected closing the respective pending TCP socket.

5. The method according to claim 2, wherein said additional session layer (46) is implemented between an application layer (21) and said TCP layer (23), and wherein remote procedure calls (RPC) of said application layer are used for invoking activities of said additional session layer (46).

6. The method according to claim 1 used for a real-time application "Voice over IP", wherein said grace period is preset to about 20 seconds, and the time-out value for time-critical messages is preset to about 5 seconds.

7. A method implemented in a client communication device (12), particularly a mobile phone, for operating a communication under inclusion of a network (10) transport layer, preferably the TCP-IP protocol, between at least said client communication device (12) and a second communication device (12), including an initial user authentication procedure (510), wherein at least a server computer (14) controlling said communication by providing a connection between said first and second communication device, wherein said communication is either extended across network borders or is confronted with repeated network disconnections due to technical network instabilities,
**characterised by** the steps of:
a) generating a session which is based on acknowledged user authentication data and is associated with said communication as soon as a connection has been successfully established between said server computer (14) and said client communication device (12),
b) keeping (60) said session valid despite said network disconnections during a predetermined grace period, wherein said grace period is predefined to be large enough to support an intra-network handover or a temporary disconnection due to network instability,
c) wherein messages are defined as "time-critical" and as "non-time-critical",
d) wherein said time-critical messages are dropped from a message queue after a given time-out value during said grace period,
e) the client communication device (12) being notified about failure of delivery of said time-critical message.

8. The method according to claim 7, wherein the steps of claim 7 are performed by an additional client software layer (22, 38) acting as a session layer on top of TCP.

9. The method according to the preceding claim, wherein "direct" messages are additionally defined for messages sent during the user authentication or login procedure, wherein said "direct" messages are not queued in order to bypass an existing message queue.

10. The method according to claim 7 wherein said client
device (12) checking for a TCP socket disconnection to one of said mobile devices, and
if a disconnection is detected closing the respective pending TCP socket.

11. The method according to claim 7, wherein said additional
session layer (22, 38) is implemented between an application layer (21) and said TCP layer (23), and wherein remote procedure calls (RPC) of said application layer are used for invoking activities of said additional session layer (46).

12. The method according to claim 7 used for a real-time
application "Voice over IP", wherein said grace period is preset to about 20 seconds, and the time-out value for time-critical messages is preset to about 5 seconds.

13. A server computer system having a functional component (40) being programmed for performing the steps of a method according to one of the preceding claims 1 to 6.

14. A mobile computer system, preferably a mobile phone
having a functional component (30) being programmed for performing the steps of a method according to one of the preceding claims 7 to 12.

15. A computer program for execution in a data processing
system comprising a functional component for performing respective steps of the method as of one of the preceding claims 1 to 12, when said computer program is executed on a server computer (14), or a mobile computing device (12).

16. A computer program product stored on a computer usable
medium comprising computer readable program means including a functional component for causing a computer to perform the steps of the method as of one of the preceding claims 1 to 12, when said computer program is executed on a server computer (14), or a mobile computing device (12), when said computer program product is executed.

## Patentansprüche

1. Verfahren, implementiert in einem Server-Computer (14), zum Betreiben einer Kommunikation unter Einschluss einer Transportschicht eines Netzwerks (10), vorzugsweise das TCP-IP-Protokoll, zwischen mindestens einer ersten Kommunikationsvorrichtung (12) und einer zweiten Kommunikationsvorrichtung (12), enthaltend eine einleitende Benutzerauthentifizierungsprozedur (510), wobei mindestens der Server-Computer (14) die Kommunikation durch Bereitstellen einer Verbindung zwischen der ersten und der zweiten Kommunikationsvorrichtung steuert, wobei die Kommunikation entweder über Netzwerkgrenzen erweitert wird oder mit wiederholten Netzwerkunterbrechungen aufgrund von technischen Netzwerkinstabilitäten konfrontiert wird,
**gekennzeichnet durch** die folgenden Schritte:
a) Erzeugen einer Sitzung, die auf bestätigten Benutzerauthentifizierungsdaten basiert und mit der Kommunikation assoziiert wird, sobald eine Verbindung zwischen dem Server-Computer (14) und einem Client (12) erfolgreich hergestellt wurde,
b) gültig Erhalten (60) der Sitzung trotz der Netzwerkunterbrechungen während einer im Voraus bestimmten Nachfrist, wobei die Nachfrist im Voraus definiert wird, lang genug zu sein, eine Übergabe im Netzwerk oder eine temporäre Unterbrechung aufgrund von Netzwerkinstabilität zu unterstützen,
c) wobei Nachrichten als "zeitkritisch" und als "nicht zeitkritisch" definiert werden,
d) und wobei der Server-Computer (14) die Sitzung für die nicht zeitkritischen Nachrichten während der im Voraus bestimmten Nachfrist aufrecht erhält (60) und wobei die nicht zeitkritischen Nachrichten während der Nachfrist in eine Warteschlange gestellt werden,
e) wobei die zeitkritischen Nachrichten nach einem gegebenen Zeitende-Wert während der Nachfrist aus einer Nachrichten-Warteschlange geworfen werden.

2. Verfahren nach Anspruch 1, wobei die Schritte nach Anspruch 1 durch eine zusätzliche Server-Software-Schicht (22, 46), die als eine Sitzungsschicht oberhalb von TCP fungiert, durchgeführt werden.

3. Verfahren gemäß dem vorstehenden Anspruch, wobei "direkte" Nachrichten für Nachrichten, die während der Benutzerauthentifizierungs- oder Anmeldungsprozedur gesandt werden, zusätzlich definiert werden, wobei die "direkten" Nachrichten nicht in die Warteschlange gestellt werden, um eine existierende Nachrichten-Warteschlange zu umgehen.

4. Verfahren nach Anspruch 1, wobei der Server (14) auf eine TCP-Socket-Unterbrechung zu einer der Mobilvorrichtungen prüft und, wenn eine Unterbrechung detektiert wird, den jeweiligen anhängigen TCP-Socket schließt.

5. Verfahren nach Anspruch 2, wobei die zusätzliche Sitzungsschicht (46) zwischen einer Anwendungsschicht (21) und der TCP-Schicht (23) implementiert ist, und wobei entfernte Prozeduraufrufe (RPC) der Anwendungsschicht zum Aufrufen von Aktivitäten der zusätzlichen Sitzungsschicht (46) verwendet werden.

6. Verfahren nach Anspruch 1, verwendet für eine Echtzeit-Anwendung "Sprache über IP", wobei die Nachfrist auf etwa 20 Sekunden voreingestellt wird und der Zeitende-Wert für zeitkritische Nachrichten auf etwa 5 Sekunden voreingestellt wird.

7. Verfahren, implementiert in einer Client-Kommunikationsvorrichtung (12), insbesondere ein Mobiltelefon, zum Betreiben einer Kommunikation unter Einschluss einer Transportschicht eines Netzwerks (10), vorzugsweise das TCP-IP-Protokoll, zwischen mindestens der Client-Kommunikationsvorrichtung (12) und einer zweiten Kommunikationsvorrichtung (12), enthaltend eine einleitende Benutzerauthentifizierungsprozedur (510), wobei mindestens ein Server-Computer (14) die Kommunikation durch Bereitstellen einer Verbindung zwischen der ersten und der zweiten Kommunikationsvorrichtung steuert, wobei die Kommunikation entweder über Netzwerkgrenzen erweitert wird oder mit wiederholten Netzwerkunterbrechungen aufgrund von technischen Netzwerkinstabilitäten konfrontiert wird,
**gekennzeichnet durch** die folgenden Schritte:
a) Erzeugen einer Sitzung, die auf bestätigten Benutzerauthentifizierungsdaten basiert und mit der Kommunikation assoziiert wird, sobald eine Verbindung zwischen dem Server-Computer (14) und der Client-Kommunikationsvorrichtung (12) erfolgreich hergestellt wurde,
b) gültig Erhalten (60) der Sitzung trotz der Netzwerkunterbrechungen während einer im Voraus bestimmten Nachfrist, wobei die Nachfrist im Voraus definiert wird, lang genug zu sein, eine Übergabe im Netzwerk oder eine temporäre Unterbrechung aufgrund von Netzwerkinstabilität zu unterstützen,
c) wobei Nachrichten als "zeitkritisch" und als "nicht zeitkritisch" definiert werden,
d) wobei die zeitkritischen Nachrichten nach einem gegebenen Zeitende-Wert während der Nachfrist aus einer Nachrichten-Warteschlange geworfen werden,
e) wobei die Client-Kommunikationsvorrichtung (12) über Nichtzustellung der zeitkritischen Nachricht benachrichtigt wird.

8. Verfahren nach Anspruch 7, wobei die Schritte nach Anspruch 7 durch eine zusätzliche Client-Software-Schicht (22, 38), die als eine Sitzungsschicht oberhalb von TCP fungiert, durchgeführt werden.

9. Verfahren gemäß dem vorstehenden Anspruch, wobei "direkte" Nachrichten für Nachrichten, die während der Benutzerauthentifizierungs- oder Anmeldungsprozedur gesandt werden, zusätzlich definiert werden, wobei die "direkten" Nachrichten nicht in die Warteschlange gestellt werden, um eine existierende Nachrichten-Warteschlange zu umgehen.

10. Verfahren nach Anspruch 7, wobei die Client-Vorrichtung (12) auf eine TCP-Socket-Unterbrechung zu einer der Mobilvorrichtungen prüft und, wenn eine Unterbrechung detektiert wird, den jeweiligen anhängigen TCP-Socket schließt.

11. Verfahren nach Anspruch 7, wobei die zusätzliche Sitzungsschicht (22, 38) zwischen einer Anwendungsschicht (21) und der TCP-Schicht (23) implementiert ist, und wobei entfernte Prozeduraufrufe (RPC) der Anwendungsschicht zum Aufrufen von Aktivitäten der zusätzlichen Sitzungsschicht (46) verwendet werden.

12. Verfahren nach Anspruch 7, verwendet für eine Echtzeit-Anwendung "Sprache über IP", wobei die Nachfrist auf etwa 20 Sekunden voreingestellt wird und der Zeitende-Wert für zeitkritische Nachrichten auf etwa 5 Sekunden voreingestellt wird.

13. Server-Computersystem mit einer funktionellen Komponente (40), die zum Durchführen der Schritte eines Verfahrens nach einem der vorstehenden Ansprüche 1 bis 6 programmiert ist.

14. Mobiles Computersystem, vorzugsweise ein Mobiltelefon, mit einer funktionellen Komponente (30), die zum Durchführen der Schritte eines Verfahrens nach einem der vorstehenden Ansprüche 7 bis 12 programmiert ist.

15. Computerprogramm zur Ausführung in einem Datenverarbeitungssystem, umfassend eine funktionelle Komponente zum Durchführen jeweiliger Schritte des Verfahrens wie von einem der vorstehenden Ansprüche 1 bis 12, wobei das Computerprogramm in einem Server-Computer (14) oder einer mobilen Rechnervorrichtung (12) ausgeführt wird.

16. Computerprogrammprodukt, gespeichert auf einem computerverwendbaren Medium, umfassend computerlesbare Programmmittel, enthaltend eine funktionelle Komponente zum Bewirken, dass ein Computer die Schritte des Verfahrens wie von einem der vorstehenden Ansprüche 1 bis 12 durchführt, wenn das Computerprogramm in einem Server-Computer (14) oder einer mobilen Rechnervorrichtung (12) ausgeführt wird, wenn das Computerprogramm ausgeführt wird.

## Revendications

1. Procédé mis en oeuvre sur un ordinateur serveur (14) pour effectuer une communication dans le contexte d'une couche de transport de réseau (10), de préférence du protocole TCP-IP, entre au moins un premier dispositif de communication (12) et un deuxième dispositif de communication (12), y compris une procédure d'authentification d'utilisateur initiale (510), dans lequel au moins ledit ordinateur serveur (14) pilote ladite communication en procurant une connexion entre ledit premier et ledit deuxième dispositif de communication, dans lequel ladite communication est soit étendue au-delà de frontières de réseau, soit confrontée à des coupures répétées de connexion de réseau dues à des instabilités techniques de réseau,
le procédé étant **caractérisé par** les étapes consistant à :
a) générer une session basée sur des données d'authentification d'utilisateur acquittées et associée à ladite communication dès qu'une connexion a été établie avec succès entre ledit ordinateur serveur (14) et un client (12),
b) maintenir (60) ladite session en état de validité en dépit desdites coupures de connexion de réseau pendant une période de grâce prédéterminée, laquelle période de grâce est prédéfinie de façon à être suffisamment grande pour admettre un transfert intra-réseau ou une coupure de connexion temporaire due à une instabilité de réseau,
c) dans lequel des messages sont définis comme étant "à criticité temporelle" et comme étant "sans criticité temporelle",
d) et ledit ordinateur serveur (14) maintenant (60) ladite session ouverte pour lesdits messages sans criticité temporelle pendant ladite période de grâce prédéterminée, et dans lequel lesdits messages sans criticité temporelle sont mis en file d'attente pendant ladite période de grâce,
e) dans lequel lesdits messages à criticité temporelle sont supprimés d'une file d'attente de messages après une valeur de temporisation donnée pendant ladite période de grâce.

2. Procédé selon la revendication 1, dans lequel les étapes de la revendication 1 sont accomplies par une couche de logiciel serveur additionnelle (22, 46) jouant le rôle d'une couche de session au-dessus de TCP.

3. Procédé selon la revendication précédente, dans lequel des messages "directs" sont en outre définis pour des messages envoyés pendant la procédure d'authentification ou de connexion d'utilisateur, dans lequel lesdits messages "directs" ne sont pas mis en file d'attente dans le but de contourner une file d'attente de messages existante.

4. Procédé selon la revendication 1, dans lequel ledit serveur (14) vérifie s'il y a une coupure de connexion de socket TCP avec l'un desdits dispositifs mobiles, et, en cas de détection d'une coupure de connexion, ferme le socket TCP en instance respectif.

5. Procédé selon la revendication 2, dans lequel ladite couche de session additionnelle (46) est implémentée entre une couche d'application (21) et ladite couche TCP (23), et dans lequel des appels de procédure à distance (RPC) de ladite couche d'application sont utilisés pour invoquer des activités de ladite couche de session additionnelle (46).

6. Procédé selon la revendication 1 utilisé pour une application temps réel "Voix sur IP", dans lequel ladite période de grâce est préétablie à environ 20 secondes, et la valeur de temporisation pour des messages à criticité temporelle est préétablie à environ 5 secondes.

7. Procédé mis en oeuvre dans un dispositif de communication client (12), notamment un téléphone mobile, pour effectuer une communication dans le contexte d'une couche de transport de réseau (10), de préférence du protocole TCP-IP, entre au moins ledit dispositif de communication client (12) et un deuxième dispositif de communication (12), y compris une procédure d'authentification d'utilisateur initiale (510), dans lequel au moins un ordinateur serveur (14) pilote ladite communication en procurant une connexion entre ledit premier et ledit deuxième dispositif de communication, dans lequel ladite communication est soit étendue au-delà de frontières de réseau, soit confrontée à des coupures répétées de connexion de réseau dues à des instabilités techniques de réseau,
le procédé étant **caractérisé par** les étapes consistant à :
a) générer une session basée sur des données d'authentification d'utilisateur acquittées et associée à ladite communication dès qu'une connexion a été établie avec succès entre ledit ordinateur serveur (14) et ledit dispositif de communication client (12),
b) maintenir (60) ladite session en état de validité en dépit desdites coupures de connexion de réseau pendant une période de grâce prédéterminée, laquelle période de grâce est prédéfinie de façon à être suffisamment grande pour admettre un transfert intra-réseau ou une coupure de connexion temporaire due à une instabilité de réseau,
c) dans lequel des messages sont définis comme étant "à criticité temporelle" et comme étant "sans criticité temporelle",
d) dans lequel lesdits messages à criticité temporelle sont supprimés d'une file d'attente de messages après une valeur de temporisation donnée pendant ladite période de grâce,
e) le dispositif de communication client (12) se voyant notifier un échec de remise dudit message à criticité temporelle.

8. Procédé selon la revendication 7, dans lequel les étapes de la revendication 7 sont accomplies par une couche de logiciel client additionnelle (22, 38) jouant le rôle d'une couche de session au-dessus de TCP.

9. Procédé selon la revendication précédente, dans lequel des messages "directs" sont en outre définis pour des messages envoyés pendant la procédure d'authentification ou de connexion d'utilisateur, dans lequel lesdits messages "directs" ne sont pas mis en file d'attente dans le but de contourner une file d'attente de messages existante.

10. Procédé selon la revendication 7, dans lequel ledit dispositif client (12) vérifie s'il y a une coupure de connexion de socket TCP avec l'un desdits dispositifs mobiles, et, en cas de détection d'une coupure de connexion, ferme le socket TCP en instance respectif.

11. Procédé selon la revendication 7, dans lequel ladite couche de session additionnelle (22, 38) est implémentée entre une couche d'application (21) et ladite couche TCP (23), et dans lequel des appels de procédure à distance (RPC) de ladite couche d'application sont utilisés pour invoquer des activités de ladite couche de session additionnelle (46).

12. Procédé selon la revendication 7 utilisé pour une application temps réel "Voix sur IP", dans lequel ladite période de grâce est préétablie à environ 20 secondes, et la valeur de temporisation pour des messages à criticité temporelle est préétablie à environ 5 secondes.

13. Système d'ordinateur serveur doté d'un composant fonctionnel (40) programmé pour accomplir les étapes d'un procédé selon l'une des revendications 1 à 6 précédentes.

14. Système d'ordinateur mobile, de préférence téléphone mobile, doté d'un composant fonctionnel (30) programmé pour accomplir les étapes d'un procédé selon l'une des revendications 7 à 12 précédentes.

15. Programme d'ordinateur destiné à être exécuté dans un système de traitement de données comprenant un composant fonctionnel destiné à accomplir des étapes respectives du procédé selon l'une des revendications 1 à 12 précédentes, lorsque ledit programme d'ordinateur est exécuté sur un ordinateur serveur (14) ou un dispositif informatique mobile (12).

16. Produit-programme d'ordinateur enregistré sur un support exploitable par ordinateur comprenant un moyen formant programme lisible par ordinateur comportant un composant fonctionnel destiné à amener un ordinateur à accomplir les étapes du procédé selon l'une des revendications 1 à 12 précédentes, lorsque ledit programme d'ordinateur est exécuté sur un ordinateur serveur (14) ou un dispositif informatique mobile (12), lorsque ledit produit-programme d'ordinateur est exécuté.
